# EUROPEAN PATENT APPLICATION

(11) **EP 4 378 661 A1**
(43) Date of publication of application: **05.06.2024**
(21) Application number: 23208086.1
(22) Date of filing: 06.11.2023
(51) Int. Cl.: B29C 53/32, B29C 55/06

(54) **DEVICE FOR MANUFACTURING ROLLS OF STRETCHABLE AND PRE-STRETCHED PACKAGING FILM**

(30) Priority: 04.11.2022 PL 44274422
(71) Applicant: Ciszewski, Tomasz, 42-446 Zawada Pilicka (PL); Ciszewski, Karol, 42-446 Zawada Pilicka (PL)
(72) Inventor: Ciszewski, Tomasz, 42-446 Zawada Pilicka (PL); Ciszewski, Karol, 42-446 Zawada Pilicka (PL)
(74) Representative: Bartula-Toch, Marta

(57) **Abstract**

The device is characterised by the fact that the pre-stretching unit (W1, R6, W2, R7, W3) has at least three drive shafts (W1, W2, W3) and situated between them two guide rollers (R6 and R7), all bearing at non-contact spacing. The drives of the propelling shafts (W1, W2, W3) successively determining the foil winding path provide that the peripheral speed of the respective propelling shaft (W2 or W3) is greater than that of the preceding shaft (W1 or W2). The drive shafts (W1, W2, W3) and guide rollers (R6, R7) of this assembly are covered with a polyurethane coating with surface roughness Ra<24 to ensure non-slip film scrolling, and there are vent grooves on the surfaces of these drive shafts (W1, W2, W3).

## Description

The object of the invention is a device for producing rolls of stretchable and pre-stretched packaging film, so-called pre-stretch film.

Pre-stretch film is used in industry, mainly to protect pallets with goods during transport and storage. The use of pre-stretch film allows a reduction in film consumption and the final cost of packaging goods. This type of film is obtained by stretching the base film, i.e. reducing its thickness due to stretching.

The device is known to operate with two shafts rotating at different speeds and an auxiliary shaft positioned between the shafts. The design of the device in use is such that it only works with high-quality film that is free of any manufacturing defects. In addition, the shafts working together in this way are failing, due to continuous friction, high speed and temperature, and have a high power requirement, and are therefore structurally and operationally uneconomical. In addition, a machine for producing rolls of pre-stretched stretch film is known from patent description EP 2 978 585. The device according to the solution comprises a pre-stretching unit for stretching the film and a unit for winding the film into a roll, as well as a series of rollers around which the fed film is partially wrapped. The pre-stretching assembly comprises in turn at least a first pre-stretching roller and an auxiliary pre-stretching roller acting on the first roller when the film is partitioned. The device further comprises a second pre-stretch roller having a speed greater than the speed of the first roller for realizing pre-stretching of the film. The winding assembly comprises a winding roller for winding the pre-stretched film. The pre-stretching assembly further comprises an annealing roller located downstream of said second pre-stretching roller and having a speed lower than that of said second pre-stretching roller and higher than that of said winding roller for achieving a first annealing of the film after the pre-stretching operation and a second annealing of the film before the winding operation.

The aim of the invention was to develop a solution that would allow films and different qualities to be processed by non-contact stretching, while ensuring their optimum degree of relaxation.

The device includes drive shafts, guide rollers and pressure rollers through which the rewound film from the bulk spool is subjected to the actions of the pre-stretch, relaxation and rewind assemblies successively. The assembly for unwinding the film from the wholesale spool is driven by a motor at a peripheral speed lower than the speed of the first drive shaft in the pre-stretching assembly, which contains drive shafts driven successively with increasing peripheral speeds, while in the relaxation assembly successive drive shafts are driven with decreasing peripheral speeds, while the last drive shaft simultaneously performs the winding function in the roll winding assembly. **The essence of the** solution according to the invention is that the pre-stretching assembly has at least three propeller shafts and two guide rollers arranged between them, all bearing in non-contact spacing, and the drives of the propeller shafts successively determining the film rewinding path provide that the peripheral speed of the respective propeller shaft is greater than the speed of the preceding shaft. The first three drive shafts and guide rollers of this assembly are covered with a polyurethane coating with surface roughness Ra<24 to ensure non-slip film winding, and vent grooves are provided on the surfaces of these drive shafts.

Advantageously, in the pre-stretch assembly, the second propeller shaft has a peripheral speed twice that of the first propeller shaft.

In an advantageous embodiment, the first and second propeller shafts are driven by a single electric motor and are coupled by a gearbox with a ratio of 1:2, especially a belt transmission, while the third propeller shaft is connected to an independent servo motor giving it a peripheral speed greater than that of the second propeller shaft, infinitely adjustable between 100 and 400%.

Advantageously, the relative spacing between the propeller shafts of the first three propeller shafts and the guide rollers of the pre-stretch assembly between them are adjustable, the guide rollers being fixed on a common rocker arm driven by a pneumatic cylinder with the stroke limited by a setting knob to a position conditioning the absence of contact between the guide rollers and the propeller shafts of this stretch assembly.

In an advantageous embodiment in the bulk spool film unwinding assembly, the position of the last guide roller ensures that the film is in contact with the first drive shaft of the pre-stretch assembly for at least 40% of the circumference of that shaft.

Advantageously, in the relaxation assembly, the position of the last guide roller ensures that the film is in contact with the first drive shaft of this assembly for at least 20% of the circumference of this shaft. Advantageously, in the pre-stretch assembly, a pressure roller mounted on a rocker arm driven by a pneumatic cylinder cooperates with the third propeller shaft, which presses it against the third propeller shaft with a force in the range of 100 to 1,000 N in the operating mode. Advantageously, in the film winding assembly for the target rollers, a second pressure roller equipped with a pneumatic cylinder cooperates with the last drive roller, which presses it against this drive roller in operation.

In the advantageous embodiment in the relaxation assembly, the propeller shaft] is driven at a peripheral speed 18 to 22% lower than the peripheral speed of the third propeller shaft of the pre-stretch assembly, while the propeller shaft is driven by its own electric servo motor with a reduction in the peripheral speed of the propeller shaft of 1 to 20%.

The advantage of the solution according to the invention is the multistage stretching of the film, which improves the quality of the final product and also makes it possible to process material of inferior quality and that which has manufacturing defects. Thanks to the design used and the adjustable distances of the shafts from each other and also from the guide rollers, the drive shafts are not degraded by friction and temperature. The reduction in the number of shafts working in pairs, results in the shafts wearing more slowly and having a lower power requirement. By applying suitable coatings to the surface of the drive shafts and guide rollers, the film glides effortlessly over successive components of the device, without slipping, but also without tearing or damage. The polyurethane coatings also protect the surfaces of the drive shafts against the build-up of adhesives contained in the processed film. The notches on the surface of the propeller shafts prevent air bubbles from forming under the surface of the film, as the air is continuously evacuated.

The use of common drives on two propeller shafts, or a bulk spool and one propeller shaft, saves energy and avoids running the unit in generator mode.

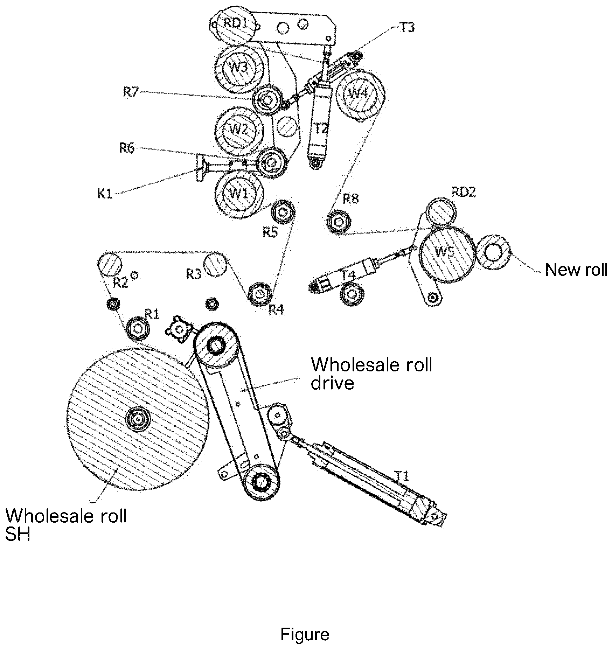

The solution according to the invention is illustrated by the embodiment shown in the figure, where the figure is a cross-section of the device.

The device is equipped with five drive shafts W1, W2, W3, W4 and W5, eight guide rollers R1, R2, R3, R4, R5, R6, R7, R8 and two pressure rollers RD1 and RD2 divided between the units for unwinding the film from the SH bulk spool, pre-stretching, relaxing and winding the film onto the target roll. The first five rollers R1, R2, R3, R4 and R5 are responsible for unwinding the film from the SH bulk spool, with rollers R1, R2, R3 rotating in a clockwise direction and the next two rollers R4 and R5 in the reverse direction. The position of the last guide roller R5 in the wholesale spool film unwinding assembly SH ensures that the film is in contact with the first drive shaft W1 of the pre-stretching assembly for at least 40% of the circumference of this shaft W1. The wholesale spool film unwinding assembly SH is driven by a motor at a peripheral speed less than the speed of the first propelling shaft W1 of the pre-stretch assembly. The pre-stretching assembly comprises propelling shafts W1, W2, W3 driven successively at increasing peripheral speeds, while in the relaxation assembly successive propelling shafts W4 and W5 are driven at decreasing peripheral speeds, with propelling shaft W5 simultaneously performing the winding function in the target reel winding assembly.

The pre-stretch assembly comprises at least three drive shafts W1, W2, W3 and situated between them two guide rollers R6 and R7, all bearing at non-contact spacing. The drives of the propelling shafts W1, W2, W3 successively determining the foil winding path provide that the peripheral speed of the respective propelling shaft W2 or W3 is greater than the speed of the preceding shaft W1 or W2. It is advantageous if the second propulsive shaft W2 has a peripheral speed twice the peripheral speed of the first propulsive shaft W1. The first W1 and the second propulsive shaft W2 are driven by a single electric motor and are coupled by a belt transmission with a ratio of 1:2, while the third propulsive shaft W3 is connected to an independent servo motor giving it a peripheral speed greater than the peripheral speed of the second propulsive shaft W2, infinitely adjustable between 100 and 400%.

The relative spacing between the propeller shafts W1, W2, W3 and the guide rollers R6, R7 of the pre-stretch assembly is adjustable, with the guide rollers R6, R7 mounted on a common rocker arm driven by a pneumatic actuator T3 with the stroke limited by the setting knob K1 to a position that ensures no contact between the guide rollers R6,R7 and the propeller shafts W1, W2, W3 of this pre-stretch assembly. In the pre-stretch assembly, a pressure roller RD1 mounted on a rocker arm driven by a pneumatic actuator T2 cooperates with the propelling shaft W3, which in operation presses it against the propelling shaft W3 with a force in the range of 100 to 1000 N.

In the relaxation assembly, the position of the guide roller R8 ensures that the film is in contact with the first propelling shaft W4 of this assembly for at least 20% of the circumference of this shaft W4. In the assembly for winding the film onto the target rollers, a pressure roller RD2 equipped with a pneumatic actuator T4 cooperates with the propelling shaft W5 , which in operation presses it against the propelling shaft W5.

In the relaxation unit, propulsion shaft W4 is driven at a peripheral speed 18 to 22% lower than that of the third propulsion shaft W3 of the pre-stretch unit, while propulsion shaft W5 is driven by its own servo electric motor with a 1 to 20% reduction in the peripheral speed of propulsion shaft W4.

The propeller shafts W1, W2, W3 and the guide rollers R6, R7 are covered with a polyurethane coating with a surface roughness Ra<24 to ensure non-slip film scrolling, and vent grooves, preferably diamond-shaped, are made on the surfaces of these propeller shafts W1, W2, W3.

Stretching of the film takes place in multiple stages between shaft W1 and roll R6, then between roll R6 and shaft W2 and successively between shaft W2 and roll R7 and between roll R7 and shaft W3.

## Claims

1. **A device for producing rolls of stretchable and pre-stretched packaging film,** comprising drive shafts (W1, W2, W3, W4, W5), guide rollers (R1, R2, R3, R4, R5, R6, R7, R8) and pressure rollers (RD1, RD2), through which the rewound film from the wholesale spool (SH) is subjected successively to the action of the assemblies: pre-stretching, relaxation and rewinding on the reel, and wherein the unwinding assembly of the film from the wholesale spool (SH) is driven by a motor at a peripheral speed lower than the speed of the first drive shaft (W1) in the pre-stretching assembly, which comprises drive shafts (W1, W2, W3) driven successively with increasing peripheral speeds, while in the relaxation assembly the successive propelling shafts (W4 and W5) are driven with decreasing peripheral speeds and the second mentioned propelling shaft (W5) simultaneously performs the winding function in the roller winding assembly, **characterised in that** the pre-tensioning unit (W1, R6, W2, R7, W3) has at least three drive shafts (W1, W2, W3) and two guide rollers (R6 and R7) arranged between them, all bearing a noncontacting spacing, and the drives of the drive shafts (W1, W2, W3) successively determining the winding path of the film are, that the peripheral speed of the respective propelling shaft (W2 or W3) is greater than that of the preceding shaft (W1 or W2), the propelling shafts (W1, W2, W3) and guide rollers (R6, R7) of this assembly being covered with a polyurethane coating with surface roughness Ra<24 to ensure non-slip winding of the film, and there are vent grooves on the surfaces of these drive shafts (W1, W2, W3).

2. Device according to claim 1, wherein in the pre-stretch assembly, the second thrust shaft (W2) has a circumferential velocity of twice the circumferential velocity of the first thrust shaft (W1).

3. Device according to claim 2, wherein the first (W1) and second propeller shafts (W2) are driven by a single electric motor and are coupled by a gearbox with a ratio of 1:2, in particular a belt transmission, while the third propeller shaft (W3) is connected to an independent servo motor giving it a peripheral speed greater than the peripheral speed of the second propeller shaft (W2), infinitely adjustable between 100 and 400%.

4. Device according to claim 1 either 2 or 3, wherein the relative spacing between the propeller shafts (W1, W2, W3) and the guide rollers (R6, R7) of the pre-stretch assembly are adjustable, the guide rollers (R6, R7) are mounted on a common rocker arm driven by a pneumatic actuator (T3) with the stroke limited by a setting knob (K1) to a position that determines no contact between the guide rollers (R6,R7) and the propeller shafts (W1, W2, W3) of this pre-stretch assembly.

5. Device according to claim 1, wherein in the assembly for unwinding the film from the bulk spool (SH), the position of the last guide roller (R5) ensures that the film is in contact with the first shoot shaft (W1) of the pre-stretch assembly for at least 40% of the circumference of said shaft (W1).

6. Device according to claim 1, wherein in the relaxation assembly the position of the guide roller (R8) ensures that the film is in contact with the first drive shaft (W4) of this assembly for at least 20% of the circumference of this shaft (W4).

7. Device according to claim 1 or 3, wherein in the pre-stretch assembly a pressure roller (RD1) mounted on a rocker arm driven by a pneumatic actuator (T2) cooperates with the propelling shaft (W3) , which in operation presses it against the propelling shaft (W3) with a force in the range of 100 to 1000 N.

8. Device according to claim 1 wherein in the assembly for winding the film on the target rollers, a pressure roller (RD2) equipped with a pneumatic actuator (T4) , which presses it against the drive shaft (W5) in operation, cooperates with the drive shaft (W5).

9. Device according to claim 1 or 6, wherein in the relaxation assembly the thrust shaft (W4) is driven at a peripheral speed 18 to 22% lower than the peripheral speed of the third thrust shaft (W3) of the pre-stretch assembly, while the thrust shaft (W5) is driven by its own servo electric motor with a reduction of the peripheral speed of the thrust shaft (W4) by 1 to 20%.
